# EUROPEAN PATENT APPLICATION

(11) **EP 4 117 054 A1**
(43) Date of publication of application: **11.01.2023**
(21) Application number: 21764175.2
(22) Date of filing: 03.03.2021
(51) Int. Cl.: H01M 4/136, H01M 4/58, H01M 4/62, H01M 10/052, H01M 10/0562, C01B 32/00, C01B 32/15, C01B 32/194, C01B 32/21, C01F 17/253

(54) **POSITIVE ELECTRODE MATERIAL AND BATTERY**

(30) Priority: 05.03.2020 JP 2020037677
(71) Applicant: Panasonic Intellectual Property Management Co., Ltd., Osaka-shi, Osaka 540-6207 (JP)
(72) Inventor: NAGAMINE Kenta, Osaka 540-6207 (JP); SASAKI Izuru, Osaka 540-6207 (JP); NISHIYAMA Seiji, Osaka 540-6207 (JP)
(74) Representative: Eisenführ Speiser
(86) International application number: PCT/JP2021/008285
(87) International publication number: WO 2021/177382

(57) **Abstract**

A positive electrode material 1000 of the present disclosure includes: a material 100 represented by the following composition formula (1); and a carbon material 101 capable of occluding at least one selected from the group consisting of a simple substance of halogen and a halide, LiₐM_{b}X_{c} ... Formula (1) where a, b, and c are each a value greater than 0, M includes at least one selected from the group consisting of metal elements other than Li and metalloid elements, and X includes a halogen element.

## Description

### TECHNICAL FIELD

The present disclosure relates to a positive electrode material for a battery and to a battery.

### BACKGROUND ART

Patent Literature 1 discloses a battery using: a positive electrode including a lithium-containing metal oxide; and a negative electrode including a carbon material.

Patent Literature 2 discloses a solid electrolyte material including lithium, yttrium, and halogen.

### CITATION LIST

### Patent Literature

Patent Literature 1: JP 1989293 B
Patent Literature 2: WO 2018/025582 A1

### SUMMARY OF INVENTION

### Technical Problem

The present disclosure provides a novel positive electrode material.

### Solution to Problem

A positive electrode material according to one aspect of the present disclosure includes:
a material represented by the following composition formula (1); and
a carbon material capable of occluding at least one selected from the group consisting of a simple substance of halogen and a halide,

   LiₐM_{b}X_{c} ... Formula (1)
where a, b, and c are each a value greater than 0, M includes at least one selected from the group consisting of metal elements other than Li and metalloid elements, and X includes a halogen element.

### Advantageous Effects of Invention

According to the present disclosure, a novel positive electrode material can be provided.

### BRIEF DESCRIPTION OF DRAWINGS

FIG. 1 is a cross-sectional view showing a schematic structure of a positive electrode material of Embodiment 1.
FIG. 2 is a cross-sectional view showing a schematic structure of a battery of Embodiment 2.
FIG. 3 is a graph showing charge and discharge curves of batteries of Examples 1, 2, and 3.
FIG. 4 is a graph showing charge and discharge curves of batteries of Reference Examples 1 and 2.
FIG. 5 is a graph showing charge and discharge curves of batteries of Examples 4, 5, 6, and 7.
FIG. 6 is a graph showing charge and discharge curves of batteries of Examples 4, 8, and 9.
FIG. 7 is a graph showing cyclic voltammograms of batteries of Examples 9 and 10 and Reference Example 2.
FIG. 8 is a graph showing results of Raman spectroscopy measurement performed on a positive electrode material of a battery of Example 11 before a charge test, after the charge test, and after a discharge test.

### DESCRIPTION OF EMBODIMENTS

### (Overview of One Aspect according to the Present Disclosure)

A positive electrode material according to a first aspect of the present disclosure includes:
a material represented by the following composition formula (1); and
a carbon material capable of occluding at least one selected from the group consisting of a simple substance of halogen and a halide,

   LiₐM_{b}X_{c} ... Formula (1)
where a, b, and c are each a value greater than 0, M includes at least one selected from the group consisting of metal elements other than Li and metalloid elements, and X includes a halogen element.

According to the first aspect, a novel positive electrode material can be provided. In a battery including this positive electrode material, a charge and discharge reaction proceeds by a novel mechanism. This positive electrode material is suitable for improving the power of the battery.

In a second aspect of the present disclosure, for example, in the positive electrode material according to the first aspect, in a Raman spectrum of the carbon material, a ratio I_{D}/I_{G} of an intensity I_{D} of a peak appearing in a range of 1300 cm⁻¹ to 1400 cm⁻¹ to an intensity I_{G} of a peak appearing in a range of 1500 cm⁻¹ to 1700 cm⁻¹ may be 0 or more and 2 or less. According to the second aspect, the carbon material can more easily occlude a simple substance of halogen or a halide.

In a third aspect of the present disclosure, for example, in the positive electrode material according to the first or second aspect, the carbon material may have a BET specific surface area of more than 5 m²g⁻¹. According to the third aspect, a contact area between the carbon material and the material represented by the composition formula (1) is large. Accordingly, the current density of a battery including the positive electrode material can be improved. Furthermore, the carbon material can more easily occlude a simple substance of halogen or a halide.

In a fourth aspect of the present disclosure, for example, in the positive electrode material according to any one of the first to third aspects, the carbon material may include at least one selected from the group consisting of graphite, graphene, graphene oxide, reduced graphene oxide, a carbon nanotube, fullerene, a carbon fiber, carbon black, soft carbon, hard carbon, mesoporous carbon, and activated carbon.

In a fifth aspect of the present disclosure, for example, in the positive electrode material according to any one of the first to third aspects, the carbon material may include at least one selected from the group consisting of carbon black, a vapor-grown carbon fiber, and graphene.

In a sixth aspect of the present disclosure, for example, in the positive electrode material according to any one of the first to fifth aspects, the M may include Y.

In a seventh aspect of the present disclosure, for example, in the positive electrode material according to any one of the first to fifth aspects, the M may include Y and Zr.

In an eighth aspect of the present disclosure, for example, in the positive electrode material according to any one of the first to seventh aspects, the X may include at least one selected from the group consisting of CI and Br.

According to the fourth to eighth aspects, a battery including the positive electrode material has more favorable charge and discharge characteristics.

A battery according to a ninth aspect of the present disclosure includes:
a positive electrode including the positive electrode material according to any one of the first to eighth aspects;
a negative electrode; and
an electrolyte layer disposed between the positive electrode and the negative electrode.

According to the ninth aspect, a charge and discharge reaction of the battery proceeds by a novel mechanism. The battery tends to have a high power.

In a tenth aspect of the present disclosure, for example, in the battery according to the ninth aspect, the negative electrode may include a negative electrode active material capable of occluding lithium.

In an eleventh aspect of the present disclosure, for example, in the battery according to the ninth or tenth aspect, the negative electrode may include at least one selected from the group consisting of metal lithium, a lithium alloy, metal indium, an indium alloy, a carbon material, silicon, a silicon alloy, silicon oxide, and lithium titanate.

According to the tenth or eleventh aspect, the battery has more favorable charge and discharge characteristics.

In a twelfth aspect of the present disclosure, for example, in the battery according to any one of the ninth to eleventh aspects, the electrolyte layer may include a solid electrolyte material, and a composition of the solid electrolyte material may be different from a composition of the material represented by the composition formula (1).

In a thirteenth aspect of the present disclosure, for example, in the battery according to any one of the ninth to twelfth aspects, the electrolyte layer may include a sulfide solid electrolyte.

According to the twelfth or thirteenth aspect, the battery has more favorable charge and discharge characteristics.

In a fourteenth aspect of the present disclosure, for example, in the battery according to any one of the ninth to thirteenth aspects, during charge, a halogen element included in the material represented by the composition formula (1) may be oxidized to generate at least one selected from the group consisting of a simple substance of halogen and a halide, and during discharge, a halogen element included in at least one selected from the group consisting of the simple substance of halogen and the halide may be reduced. According to the fourteenth aspect, a charge and discharge reaction of the battery proceeds by a novel mechanism.

Embodiments of the present disclosure will be described below with reference to the drawings.

### (Embodiment 1)

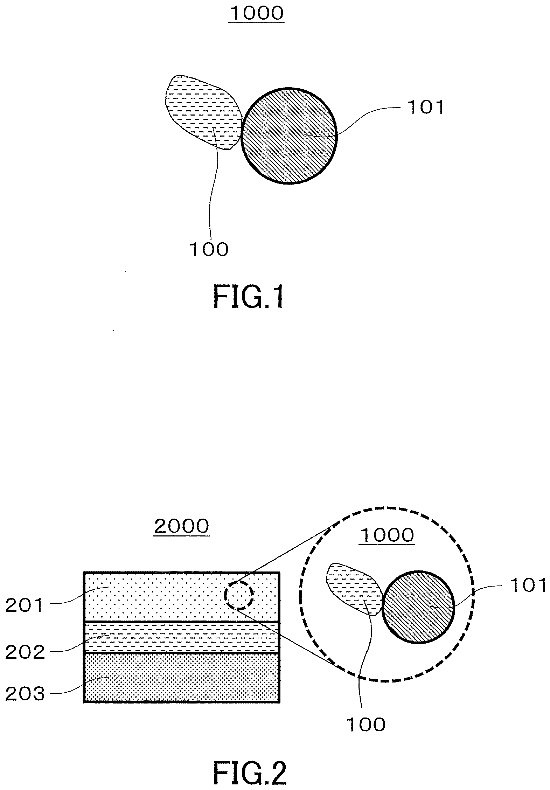

FIG. 1 is a cross-sectional view showing a schematic structure of a positive electrode material 1000 according to Embodiment 1.

The positive electrode material 1000 includes a material 100 represented by the following composition formula (1) and a carbon material 101. The material 100 may be a material known as a halide solid electrolyte. In the present description, the material 100 is referred to also as "halide material".

LiₐM_{b}X_{c} ... Formula (1)

Here, a, b, and c are each a value greater than 0. The symbols a, b, and c may satisfy a + b < c. M includes at least one selected from the group consisting of metal elements other than Li and metalloid elements. X includes a halogen element. The halogen element includes, for example, at least one selected from the group consisting of F, CI, Br, and I.

In the present disclosure, the term "metalloid elements" are B, Si, Ge, As, Sb, and Te. The term "metal elements" are all the elements included in Groups 1 to 12 of the periodic table except for hydrogen and all the elements included in Groups 13 to 16 of the periodic table except for B, Si, Ge, As, Sb, Te, C, N, P, O, S, and Se. In other words, "metalloid elements" and "metal elements" are each a group of elements that can become cations when forming an inorganic compound with a halogen compound.

The carbon material 101 is capable of occluding at least one selected from the group consisting of a simple substance of halogen and a halide. In the present description, the phrase "the carbon material occludes..." means that the carbon material 101 incorporates an element other than carbon from the outside of the carbon material 101 and retains the element on the surface or the inside of the carbon material 101. Furthermore, the carbon material 101 is capable of releasing at least one selected from the group consisting of the simple substance of halogen and the halide, which has been occluded. The phrase "the carbon material releases..." means that the other element occluded by the carbon material 101 is desorbed from the carbon material 101.

With the above structure, a novel positive electrode material can be achieved. Furthermore, this positive electrode material can achieve a battery in which a charge and discharge reaction proceeds by a mechanism different from that of conventional lithium ion batteries. Additionally, the halide material may be free of sulfur.

Patent Literature 1 discloses a lithium ion battery using: a positive electrode including a lithium-containing metal oxide; a negative electrode including a carbon material; and a nonaqueous organic electrolyte solution as an electrolyte. In the battery of Patent Literature 1, lithium ions are desorbed from the lithium-containing metal oxide during charge. The lithium ions are solvated in the electrolyte solution to diffuse into the electrolyte solution. The lithium ions diffused into the electrolyte solution are occluded by the carbon material.

Patent Literature 2 discloses a solid electrolyte material having a composition represented by Li₃YBr₆. In this solid electrolyte material, halogen is strongly attracted to yttrium. Accordingly, the solid electrolyte material exhibits high ionic conductivity. In

Patent Literature 2, the ionic conductivity of the solid electrolyte material is utilized for battery charge and discharge.

As a result of intensive studies, the present inventors have newly found that, by using a positive electrode material in which a material represented by LiₐM_{b}X_{c} is combined with a carbon material that is capable of occluding at least one selected from the group consisting of a simple substance of halogen and a halide, it is possible to produce a battery that can be subjected to reversible charge and discharge by a mechanism different from that of conventional batteries.

Charge and discharge of a battery including the positive electrode material of the present embodiment are performed by the following mechanism. First, during charge of the battery, a halogen element included in the material 100 is oxidized. At this time, lithium ions are released from the material 100 for charge compensation. At least one selected from the group consisting of a simple substance of halogen and a halide is generated by the oxidation of the halogen element. The simple substance of halogen is, for example, a compound represented by X₂. The halide is, for example, a compound represented by MX_{d}. Here, d represents a value equal to the valence of M. The generated simple substance of halogen or halide is occluded by the carbon material 101. The lithium ions move, for example, through an electrolyte layer of the battery to be occluded by a negative electrode. Next, during discharge of the battery, the lithium ions occluded by the negative electrode are released from the negative electrode. The lithium ions move to the positive electrode through the electrolyte layer. In the positive electrode during the discharge, the simple substance of halogen or the halide is reduced with acceptance of electrons. Specifically, a halogen element included in at least one selected from the group consisting of the simple substance of halogen or the halide is reduced. The reduced simple substance of halogen or halide reacts with the lithium ions moved from the negative electrode, and was released from the carbon material 101. According to the material 100 represented by the composition formula (1), during charge and discharge of the battery, a change of the internal structure of the positive electrode is suppressed. For example, during charge of the battery, generation of voids inside the positive electrode is suppressed. It is inferred that a reversible charge and discharge reaction thus proceeds in the battery. In the present embodiment, the material 100 and the carbon material 101 can function as the positive electrode active material.

In lithium-ion batteries, to proceed desorption or insertion of lithium in a positive electrode and a negative electrode, an active material and an electrolyte need to rapidly exchange electrons and lithium ions with each other. For example, in the positive electrode, electrons and lithium ions are exchanged at a three-phase interface formed by a positive electrode active material, a conductive additive, and an electrolyte. The positive electrode active material is, for example, an oxide that stores lithium ions. The conductive additive has, for example, a function of assisting conduction of electrons. The electrolyte is, for example, included in an electrolyte solution or an electrolyte layer and capable of transporting lithium ions. In a positive electrode active material of lithium-ion batteries, electrons are conducted by, for example, hopping conduction through a metal-oxygen-metal bond. In this case, the electronic conductivity of the positive electrode active material is greatly influenced by the electronic state of metal ions included in the positive electrode active material. For example, in the case where the valence of the metal ions is uniform in the positive electrode active material, the electronic conductivity of the positive electrode active material decreases. In other words, at the final stage of charge or the final stage of discharge of the battery, the electronic conductivity of the positive electrode active material decreases.

In a positive electrode including the positive electrode material of the present embodiment, for example, electrons and lithium ions are exchanged at a two-phase interface formed by the carbon material 101 having high electronic conductivity and the material 100 having high ionic conductivity. In other words, a charge and discharge reaction proceeds using the two-phase interface. Accordingly, the positive electrode material of the present embodiment is suitable for improving the current density of the battery.

In the Raman spectrum of the carbon material 101, a ratio I_{D}/I_{G} of an intensity I_{D} of a peak appearing in a range of 1300 cm⁻¹ to 1400 cm⁻¹ to an intensity I_{G} of a peak appearing in a range of 1500 cm⁻¹ to 1700 cm⁻¹ is, for example, 0 or more and 2 or less.

With the above structure, the carbon material 101 can more easily occlude a simple substance of halogen or a halide.

The Raman spectrum of the carbon material 101 can be obtained, for example, by laser Raman spectrometry. The peak appearing in the range of 1300 cm⁻¹ to 1400 cm⁻¹ is derived, for example, from the sp³ bond of carbon. The peak appearing in the range of 1500 cm⁻¹ to 1700 cm⁻¹ is derived, for example, from the sp² bond of carbon. Accordingly, the lower the ratio I_{D}/I_{G} is, the more π electrons the carbon material 101 has. A simple substance of halogen or a halide generated during charge of the battery including the positive electrode material 1000 of the present embodiment tends to be attracted to π electrons of the carbon material 101. Accordingly, the lower the ratio I_{D}/I_{G} is, the more easily the carbon material 101 can occlude a simple substance of halogen or a halide.

The ratio I_{D}/I_{G} may be 0 or more and 1.6 or less, 0 or more and 1.1 or less, 0 or more and 0.5 or less, or 0 or more and 0.1 or less.

With the above structure, the carbon material 101 can more easily occlude a simple substance of halogen or a halide.

The carbon material 101 has a BET specific surface area of, for example, more than 5 m²g⁻¹. The BET specific surface area of the carbon material 101 can be obtained, for example, by a BET (Brunauer-Emmett-Teller) method by nitrogen gas adsorption. The larger the BET specific surface area of the carbon material 101 is, the larger a contact area between the carbon material 101 and the material 100 is. The BET specific surface area of the carbon material 101 being more than 5 m²g⁻¹ tends to improve the current density of the battery including the positive electrode material 1000. There is also a tendency that the larger the BET specific surface area of the carbon material 101 is, the more easily the carbon material 101 can occlude a simple substance of halogen or a halide. Furthermore, with the above structure, a battery having more favorable charge and discharge characteristics can be achieved.

The BET specific surface area of the carbon material 101 may be more than 10 m²g⁻¹, more than 14 m²g⁻¹, 40 m²g⁻¹ or more, or 100 m²g⁻¹ or more. The upper limit for the BET specific surface area of the carbon material 101 is not particularly limited, and is, for example, 1000 m²g⁻¹.

With the above structure, the current density of the battery including the positive electrode material 1000 tends to improve. Furthermore, with the above structure, a battery having more favorable charge and discharge characteristics can be achieved.

The shape of the carbon material 101 is not particularly limited, and is, for example, particulate. In the present disclosure, the term "particulate" includes an acicular shape, a flaky shape, a spherical shape, and an ellipsoidal shape. In the case where the shape of the carbon material 101 is particulate (e.g., spherical), the median diameter of the carbon material 101 is not particularly limited, and may be 0.001 µm or more and 100 µm or less. In the case where the median diameter of the carbon material 101 is 0.001 µm or more, the carbon material 101 and the material 100 can form a favorable dispersion state in the positive electrode material 1000. This can improve the charge and discharge characteristics of the battery including the positive electrode material 1000. In the case where the median diameter of the carbon material 101 is 100 µm or less, the diffusion rate of lithium in the carbon material 101 increases. This allows the battery to operate at a high power.

The median diameter of the carbon material 101 may be less than 10 µm, less than 8 µm, 5 µm or less, 3 µm or less, or 1 µm or less. The lower limit for the median diameter of the carbon material 101 may be 0.01 µm.

With the above structure, a battery having more favorable charge and discharge characteristics can be achieved.

The median diameter of the carbon material 101 may be larger than the median diameter of the material 100 described later. This allows the carbon material 101 and the material 100 to form a favorable dispersion state.

In the present description, the median diameter means the particle diameter (d50) at a cumulative volume percentage of 50% in a volumetric particle size distribution measured by a laser diffraction scattering method.

The carbon material 101 includes, for example, at least one selected from the group consisting of graphite, graphene, graphene oxide, reduced graphene oxide (RGO), a carbon nanotube (CNT), fullerene, a carbon fiber, carbon black (CB), soft carbon (graphitizable carbon), hard carbon (non-graphitizable carbon), mesoporous carbon, and activated carbon. The graphite may be natural graphite or artificial graphite such as highly-oriented pyrolytic graphite (HOPG). The carbon fiber is, for example, a vapor-grown carbon fiber. The carbon black may be acetylene black (AB) or ketjen black (KB). The carbon material may include at least one selected from the group consisting of carbon black, a vapor-grown carbon fiber, and graphene.

With the above structure, a battery having more favorable charge and discharge characteristics can be achieved.

The content of the carbon material 101 in the positive electrode material 1000 is not particularly limited, and may be 1 weight% or more, 5 weight% or more, 10 weight% or more, or 15 weight% or more. The upper limit for the content of the carbon material 101 is not particularly limited, and is, for example, 40 weight%. There is a tendency that the higher the content of the carbon material 101 is, the higher discharge capacity the battery including the positive electrode material 1000 has.

M in the composition formula (1) may include Y, or may include Y and Zr.

With the above structure, a battery having more favorable charge and discharge characteristics can be achieved.

X in the composition formula (1) may include at least one selected from the group consisting of CI and Br, or may include both Cl and Br.

With the above structure, a battery having more favorable charge and discharge characteristics can be achieved.

In the composition formula (1), a, b, and c may satisfy 1 ≤ a ≤ 5, 0 < b ≤ 2, and 5.5 ≤ c ≤ 6.5, or may satisfy 1.5 ≤ a ≤ 4.5, 0.5 ≤ b ≤ 1.5, and c = 6. The symbols a, b, and c may satisfy a relationship of a + mb = c, where m represents the valence of M. In the case where M includes a plurality of types of elements, mb represents the total of values each obtained by multiplying the composition ratio of each of the elements by the valence of the element. Assume a case where, for example, M includes an element M1 and an element M2, the composition ratio of the element M1 is represented by b₁, the valence of the element M1 is represented by m₁, the composition ratio of the element M2 is represented by b₂, and the valence of the element M2 is represented by m₂ In this case, mb = m₁b₁ + m₂b₂ holds. In the case where the element M can have a plurality of valences, the above relational expression only needs to be satisfied with respect to each of these possible valences, where m takes on the valence.

The shape of the material 100 is not particularly limited, and is, for example, particulate. In the case where the shape of the material 100 is particulate (e.g., spherical), the median diameter of the material 100 may be 100 µm or less. In the case where the median diameter of the material 100 is 100 µm or less, the material 100 and the carbon material 101 can form a favorable dispersion state in the positive electrode material 1000. This improves the charge and discharge characteristics of the battery. The median diameter of the material 100 may be 10 µm or less.

The content of the material 100 in the positive electrode material 1000 is not particularly limited, and may be 30 weight% or more or 50 weight% or more. The upper limit for the content of the material 100 may be 95 weight%, 90 weight%, or 85 weight%.

The positive electrode material 1000 may further include a material other than the material 100 and the carbon material 101. Examples of the other material include a positive electrode active material, a binder, and a conductive additive.

Examples of the positive electrode active material include a lithium-containing transition metal oxide, a transition metal fluoride, a polyanion material, a fluorinated polyanion material, a transition metal sulfide, a transition metal oxysulfide, and a transition metal oxynitride. Examples of the lithium-containing transition metal oxide include Li(NiCoAl)O₂, Li(NiCoMn)O₂, and LiCoO₂. In particular, in the case where the lithium-containing transition metal oxide is used as the positive electrode active material, the average discharge voltage of the battery can be improved.

The positive electrode active material may include lithium nickel cobalt manganese oxide as the lithium-containing transition metal oxide. For example, the positive electrode active material may be Li(NiCoMn)O₂. With the above structure, the positive electrode material 1000 can further improve the energy density of the battery and the charge and discharge efficiency of the battery.

The binder is used, for example, in producing a positive electrode from the positive electrode material 1000, to improve the adhesion between particles and the binding properties of the materials of the positive electrode. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrene-butadiene rubber, and carboxymethylcellulose. As the binder can also be used a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from these materials may also be used as the binder.

The conductive additive can be used for the purpose of improving the electronic conductivity of the positive electrode material 1000. Examples of the conductive additive include: conductive fibers such as a metal fiber; metal powders such as a fluorinated carbon powder and an aluminum powder; conductive whiskers such as a zinc oxide whisker and a potassium titanate whisker; conductive metal oxides such as titanium oxide; and conductive polymer compounds such as a polyacetylene compound, a polyaniline compound, a polypyrrole compound, and a polythiophene compound. The conductive polymer compound is suitable for improving the electronic conductivity and plasticity of the positive electrode formed of the positive electrode material 1000.

The content of the other material in the positive electrode material 1000 is not particularly limited, and may be 50 weight% or less, 30 weight% or less, 10 weight% or less, or 5 weight% or less. The positive electrode material 1000 may be essentially free of the other material. In particular, the positive electrode material 1000 may be essentially free of the positive electrode active material as the other material. In other words, the positive electrode material 1000 may consist essentially of the material 100 and the carbon material 101. The phrase "consist essentially of..." means exclusion of other components that alter the essential characteristics of the material referred to. However, the positive electrode material 1000 may include impurities in addition to the material 100 and the carbon material 101.

The positive electrode material 1000 may include particles of a plurality of materials 100, particles of a plurality of carbon materials 101, and particles of a plurality of positive electrode active materials.

### <Method of Manufacturing Material Represented by Composition Formula (1)>

In Embodiment 1, the material 100 can be manufactured, for example, by the following method.

First, a raw material powder of a binary halide is prepared at a blending ratio according to a target composition. Binary halides refer to compounds consisting of two types of elements including a halogen element. For example, to produce Li₃YCl₆, a raw material powder of LiCI and a raw material powder of YCl₃ are prepared at a molar ratio of 3: 1.

At this time, the elements "M" and "X" in the above composition formula (1) are determined by the type of raw material powder. The values of "a", "b", and "c" in the above composition formula (1) described above are determined by the type of raw material powder, the blending ratio, and the synthesis process.

The raw material powders are each sufficiently mixed, and then the raw material powders are mixed together, pulverized, and reacted together by a mechanochemical milling method. The raw material powders may be sintered in a vacuum after being sufficiently mixed.

By these methods, the material 100 including a crystal phase of the above composition is obtained.

Additionally, the structure of the crystal phase (crystal structure) of the material 100 is determined in accordance with the reaction method and reaction conditions of the raw material powders.

### (Embodiment 2)

Embodiment 2 will be described below. The description overlapping that in Embodiment 1 above will be omitted as appropriate.

FIG. 2 is a cross-sectional view showing a schematic structure of a battery 2000 of Embodiment 2.

The battery 2000 includes a positive electrode 201, an electrolyte layer 202, and a negative electrode 203.

The positive electrode 201 includes the positive electrode material 1000 of Embodiment 1 described above.

The electrolyte layer 202 is disposed between the positive electrode 201 and the negative electrode 203.

With the above structure, a charge and discharge reaction of the battery 2000 proceeds by a novel mechanism. Furthermore, an increase in reaction overpotential of the battery 2000 can be suppressed.

With respect to the volume ratio "v1: 100 - v1" of the carbon material 101 to the material 100 in the positive electrode 201, 5 ≤ v1 ≤ 95 may be satisfied. The symbol v1 represents, when the total volume of the carbon material 101 and the material 100 included in the positive electrode 201 is defined as 100, the volume ratio of the carbon material 101. In the case where v1 satisfies 5 ≤ v1, a sufficient energy density of the battery can be achieved. In the case where v1 satisfies v1 ≤ 95, the battery can operate at a high power.

The thickness of the positive electrode 201 may be 5 µm or more and 500 µm or less. In the case where the thickness of the positive electrode 201 is 5 µm or more, a sufficient energy density of the battery can be achieved. In the case where the thickness of the positive electrode 201 is 500 µm or less, the battery can operate at a high power.

The electrolyte layer 202 is a layer including an electrolyte material. The electrolyte material included in the electrolyte layer 202 is, for example, a solid electrolyte material. In other words, the electrolyte layer 202 may be a solid electrolyte layer.

Examples of the solid electrolyte material included in the electrolyte layer 202 include a halide solid electrolyte, a sulfide solid electrolyte, an oxide solid electrolyte, a polymer solid electrolyte, and a complex hydride solid electrolyte. The electrolyte layer 202 may include a sulfide solid electrolyte.

The composition of the solid electrolyte material included in the electrolyte layer 202 may be the same as the composition of the material 100 of the positive electrode material 1000 of Embodiment 1 described above. In other words, the electrolyte layer 202 may include, as the solid electrolyte material, the material 100 of Embodiment 1 described above.

With the above structure, the power density and the charge and discharge characteristics of the battery can be further improved.

The composition of the solid electrolyte material included in the electrolyte layer 202 may be different from the composition of the material 100 of the positive electrode material 1000 of Embodiment 1 described above. The electrolyte layer 202 may include, as the solid electrolyte material, a halide solid electrolyte having a composition different from the composition of the material 100 of Embodiment 1 described above.

With the above structure, the charge and discharge characteristics of the battery can be further improved.

As the sulfide solid electrolyte, Li₂S-P₂S₅, Li₂S-SiS₂, Li₂S-B₂S₃, Li₂S-GeS₂, Li_{3.25}Ge_{0.25}P_{0.75}S₄, Li₁₀GeP₂S₁₂, or the like can be used. LiX, Li₂O, MO_{q}, LiₚMO_{q}, or the like may be added to these sulfide solid electrolytes. Here, X is at least one selected from the group consisting of F, CI, Br, and I. M is at least one selected from the group consisting of P, Si, Ge, B, Al, Ga, In, Fe, and Zn. The symbols p and q are each a natural number.

With the above structure, since the electrolyte layer 202 includes the sulfide solid electrolyte having excellent reduction stability, a low-potential material such as graphite or metal lithium can be used as the negative electrode material. Accordingly, the energy density of the battery can be improved.

Examples which can be used as the oxide solid electrolyte include: a NASICON solid electrolyte typified by LiTi₂(PO₄)₃ and element-substituted substances thereof; a (LaLi)TiO₃ perovskite solid electrolyte; a LISICON solid electrolyte typified by Li₁₄ZnGe₄O₁₆, Li₄SiO₄, and LiGeO₄ and element-substituted substances thereof; a garnet solid electrolyte typified by Li₇La₃Zr₂O₁₂ and element-substituted substances thereof; Li₃N and H-substituted substances thereof; Li₃PO₄ and N-substituted substances thereof; and glass or glass ceramics that include a Li-B-O compound such as UBO₂ or U₃BO₃ as a base and to which Li₂SO₄, Li₂CO₃, or the like has been added.

As the polymer solid electrolyte, a compound of a polymer compound or a lithium salt can be used, for example. The polymer compound may have an ethylene oxide structure. A polymer compound having an ethylene oxide structure can contain a large amount of a lithium salt. Accordingly, the ionic conductivity of the electrolyte layer 202 can be further increased. Examples which can be used as the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from the exemplified lithium salts can be used alone. A mixture of two or more lithium salts selected from the exemplified lithium salts may be used.

As the complex hydride solid electrolyte, LiBH₄-Lil or LiBH₄-P₂S₅ can be used, for example.

The electrolyte layer 202 may include a solid electrolyte material as its main component. In other words, the electrolyte layer 202 may include the solid electrolyte material, for example, at a weight proportion of 50 weight% or more with respect to the entire electrolyte layer 202.

With the above structure, the charge and discharge characteristics of the battery can be further improved.

The electrolyte layer 202 may include the solid electrolyte material, for example, at a weight proportion of 70 weight% or more with respect to the entire electrolyte layer 202.

With the above structure, the charge and discharge characteristics of the battery can be further improved.

The electrolyte layer 202 may include the solid electrolyte material as its main component and further include inevitable impurities, a starting material used for synthesis of the solid electrolyte material, a by-product, a decomposition product, etc.

The electrolyte layer 202 may include the solid electrolyte material, for example, at a weight proportion of 100 weight% with respect to the entire electrolyte layer 202, except for inevitably incorporated impurities.

With the above structure, the charge and discharge characteristics of the battery can be further improved.

As described above, the electrolyte layer 202 may consist essentially of the solid electrolyte material.

The electrolyte layer 202 may include two or more of the materials listed as the solid electrolyte material. For example, the electrolyte layer 202 may include a halide solid electrolyte and a sulfide solid electrolyte.

The thickness of the electrolyte layer 202 may be 1 µm or more and 300 µm or less. In the case where the thickness of the electrolyte layer 202 is 1 µm or more, it is possible to more reliably separate the positive electrode 201 and the negative electrode 203. In the case where the thickness of the electrolyte layer 202 is 300 µm or less, the battery can operate at a high power.

The electrolyte layer 202 may have a multilayer structure in which two or more layers having different compositions are stacked. For example, in the electrolyte layer 202, a layer including a halide solid electrolyte and a layer including a sulfide solid electrolyte may be stacked.

With the above structure, a battery having more favorable charge and discharge characteristics can be achieved.

The negative electrode 203 includes a material having properties of occluding and releasing metal ions (e.g., lithium ions). The negative electrode 203 includes, for example, a negative electrode active material. Specifically, the negative electrode 203 may include a negative electrode active material capable of occluding lithium. With the above structure, a battery having more favorable charge and discharge characteristics can be achieved.

As the negative electrode active material, a metal material, a carbon material, an oxide, a nitride, a tin compound, a silicon compound, or the like can be used. The metal material may be an elemental metal. The metal material may be an alloy. Examples of the metal material include metal lithium and a lithium alloy. Examples of the carbon material include natural graphite, coke, semi-graphitized carbon, a carbon fiber, spherical carbon, artificial graphite, and amorphous carbon. From the viewpoint of capacity density of the battery, silicon (Si), tin (Sn), a silicon compound, and a tin compound can be used.

The negative electrode 203 may include, as the negative electrode active material, at least one selected from the group consisting of metal lithium, a lithium alloy, metal indium, an indium alloy, a carbon material, silicon, a silicon alloy, silicon oxide, and lithium titanate.

With the above structure, a battery having more favorable charge and discharge characteristics can be achieved.

The negative electrode 203 may include a solid electrolyte material. As the solid electrolyte material included in the negative electrode 203, the solid electrolyte material exemplified as the material of the electrolyte layer 202 may be used. With the above structure, the lithium-ion conductivity inside the negative electrode 203 can be improved, thereby allowing the battery to operate at a high power.

The shape of the negative electrode active material is not particularly limited, and is, for example, particulate. In the case where the shape of the negative electrode active material is particulate (e.g., spherical), the median diameter of the negative electrode active material may be 0.1 µm or more and 100 µm or less. In the case where the median diameter of the negative electrode active material is 0.1 µm or more, the negative electrode active material and the solid electrolyte material can form a favorable dispersion state in the negative electrode 203. This improves the charge and discharge characteristics of the battery. In the case where the median diameter of the negative electrode active material is 100 µm or less, the diffusion rate of lithium in the negative electrode active material increases. This allows the battery to operate at a high power.

In the negative electrode 203, the median diameter of the negative electrode active material may be larger than the median diameter of the solid electrolyte material. This allows the negative electrode active material and the solid electrolyte material to form a favorable dispersion state.

With respect to the volume ratio "v2: 100 - v2" of the negative electrode active material to the solid electrolyte material in the negative electrode 203, 30 ≤ v2 ≤ 95 may be satisfied. The symbol v2 represents, when the total volume of the negative electrode active material and the solid electrolyte material included in the negative electrode 203 is defined as 100, the volume ratio of the negative electrode active material. In the case where v2 satisfies 30 ≤ v2, a sufficient energy density of the battery can be achieved. In the case where v2 satisfies v2 ≤ 95, the battery can operate at a high power.

The thickness of the negative electrode 203 may be 10 µm or more and 500 µm or less. In the case where the thickness of the negative electrode 203 is 10 µm or more, a sufficient energy density of the battery can be achieved. In the case where the thickness of the negative electrode 203 is 500 µm or less, the battery can operate at a high power.

At least one selected from the group consisting of the electrolyte layer 202 and the negative electrode 203 may contain a binder for the purpose of improving the adhesion between particles. The binder is used, for example, to improve the binding properties of the materials of the negative electrode 203. As the binder, the binder described above for the positive electrode material 1000 can be used, for example.

The negative electrode 203 may contain a conductive additive for the purpose of improving the electronic conductivity. Examples of the conductive additive contained in the negative electrode 203 include: graphites such as natural graphite and artificial graphite; carbon blacks such as acetylene black and ketjen black; conductive fibers such as a carbon fiber and a metal fiber; metal powders such as a fluorinated carbon powder and an aluminum powder; conductive whiskers such as a zinc oxide whisker and a potassium titanate whisker; conductive metal oxides such as titanium oxide; and conductive polymer compounds such as a polyaniline compound, a polypyrrole compound, and a polythiophene compound. Using a conductive carbon additive as the conductive additive can seek cost reduction.

Examples of the shape of the battery 2000 include a coin type, a cylindrical type, a prismatic type, a sheet type, a button type, a flat type, and a stack type.

### Examples

The details of the present disclosure will be described below with reference to examples. The present disclosure is not limited to the following examples.

### <<Example 1>>

### [Production of Material Represented by Composition Formula (1)]

In an argon atmosphere with a dew point of -60°C or lower, LiCI, YCl₃, and YBr₃ were weighed as raw material powders at a molar ratio of LiCI: YCl₃: YBr₃ = 3.000: 0.333: 0.666. These raw material powders were pulverized for mixing in a mortar. Next, the resulting mixture was fired at 500°C for 3 hours in an argon atmosphere. The firing was performed using an electric furnace. The resulting fired product was pulverized with a pestle and a mortar. Thus, a powder of the material represented by the composition formula (1) was obtained. In the present description, the material obtained by the above method is referred to also as LYBC.

### [Production of Positive Electrode Material]

In an argon atmosphere with a dew point of -60°C or lower, the powder of the material represented by the composition formula (1) and a powder of a carbon material were weighed at a mass ratio of 92.6: 7.4. The carbon material used was graphite having a median diameter of 3 µm. These materials were then mixed in an agate mortar to produce a positive electrode material.

### [Production of Battery]

In an insulating outer cylinder, Li₆PS₅Cl, which is a sulfide solid electrolyte, a powder of LYBC, and the positive electrode material were stacked in this order. The weight of Li₆PS₅Cl was 60 mg. The weight of LYBC was 20 mg. The weight of the positive electrode material was 5 mg. Next, a pressure of 720 MPa was applied to these materials to obtain a solid electrolyte layer and a first electrode serving as a positive electrode.

Next, a metal In foil and a metal Li foil were stacked on one surface of the solid electrolyte layer opposite to the other surface in contact with the first electrode. A pressure of 80 MPa was applied to these metal foils to produce a stack including the first electrode, the solid electrolyte layer, and a second electrode serving as a negative electrode.

Next, respective current collectors made of stainless steel were placed on the positive electrode and the negative electrode, and current collector leads were attached to these current collectors. Next, an insulating ferrule was used to block the inside of the insulating outer cylinder from the outside air atmosphere and seal the insulating outer cylinder. Thus, a battery of Example 1 was produced.

### [Charge and Discharge Test]

The battery of Example 1 was subjected to a charge and discharge test by the following method. First, the battery was placed in a thermostatic chamber set to 25°C. The battery was charged with a constant current at a current value of 0.05 mA. The charge was performed until the voltage of the battery reached 4.0 V. Next, the battery was discharged at a current value of 0.05 mA. The discharge was performed until the voltage of the battery reached 1.9 V.

### «Example 2»

A battery of Example 2 was produced by the same method as that of Example 1, except that a positive electrode material was produced using the powder of the material represented by the composition formula (1) and the powder of the carbon material at a mass ratio of 83.0: 17.0. Furthermore, the battery of Example 2 was subjected to a charge and discharge test by the same method as that of Example 1.

### «Example 3»

A battery of Example 3 was produced by the same method as that of Example 1, except that a positive electrode material was produced using the powder of the material represented by the composition formula (1) and the powder of the carbon material at a mass ratio of 76.5: 23.5. Furthermore, the battery of Example 3 was subjected to a charge and discharge test by the same method as that of Example 1.

### «Example 4»

A battery of Example 4 was produced by the same method as that of Example 1, except that acetylene black was used as the carbon material in producing a positive electrode material. Furthermore, the battery of Example 4 was subjected to a charge and discharge test by the same method as that of Example 1.

### «Example 5»

A battery of Example 5 was produced by the same method as in Example 1, except that carbon black was used as the carbon material in producing a positive electrode material. Furthermore, the battery of Example 5 was subjected to a charge and discharge test by the same method as that of Example 1.

### <<Example6>>

A battery of Example 6 was produced by the same method as in Example 1, except that a vapor-grown carbon fiber (VGCF (registered trademark)) was used as the carbon material in producing a positive electrode material. Furthermore, the battery of Example 6 was subjected to a charge and discharge test by the same method as that of

### Example 1.

### <<Example7>>

A battery of Example 7 was produced by the same method as in Example 1, except that graphene was used as the carbon material in producing a positive electrode material. Furthermore, the battery of Example 7 was subjected to a charge and discharge test by the same method as that of Example 1.

### «Example 8»

Batteries of Example 8 were produced by the same method as that of Example 4, except that Li₃YBr₆ was used as the material represented by the composition formula (1) in producing a positive electrode material. In Example 8, the battery for use in a charge and discharge test and the battery for use in cyclic voltammetry measurement described later were prepared. Li₃YBr₆ was produced by the following method. First, in an argon glove box with a dew point of -60°C or lower, LiBr and YBr₃ were weighed as raw material powders at a molar ratio of LiBr: YBr₃ = 3: 1. Next, the mixture of these raw material powders was subjected to a milling process at a rotation speed of 600 rpm for 25 hours using a planetary ball mill (Type P-7 manufactured by Fritsch GmbH). Thus, a powder of Li₃YBr₆ was obtained. In the present description, Li₃YBr₆ is referred to also as LYB. Furthermore, the battery of Example 8 was subjected to a charge and discharge test by the same method as that of Example 1.

The battery of Example 8 was also subjected to cyclic voltammetry (CV) measurement by the following method. First, the battery was placed in a thermostatic chamber set to 25°C. The battery was connected to a potentiogalvanostat and the CV measurement was performed. In the CV measurement, the sweep rate was set to 10 mV/s. The scanning range was set to 4.0 V to 1.9 V vs. In-Li.

### «Example 9»

Batteries of Example 9 were produced by the same method as that of Example 4, except that Li_{2.7}Y_{1.1}Cl₆ was used as the material represented by the composition formula (1) in producing a positive electrode material. In Example 9, the battery for use in a charge and discharge test and the battery for use in CV measurement were prepared. Li_{2.7}Y_{1.1}Cl₆ was produced by the following method. First, in an argon glove box with a dew point of -60°C or lower, LiCI and YCl₃ were weighed as raw material powders at a molar ratio of LiCI: YCl₃ = 2.7: 1.1. Next, the mixture of these raw material powders was subjected to a milling process at a rotation speed of 600 rpm for 25 hours using a planetary ball mill (Type P-7 manufactured by Fritsch GmbH). Thus, a powder of Li_{2.7}Y_{1.1}Cl₆ was obtained. In the present description, Li_{2.7}Y_{1.1}Cl₆ is referred to also as LYC. Furthermore, the battery of Example 9 was subjected to a charge and discharge test by the same method as that of Example 1. The CV measurement was performed on the battery of Example 9 by the same method as that of Example 8.

### «Example 10»

A battery of Example 10 was produced by the same method as that of Example 4, except that Li_{2.5}Y_{0.5}Zr_{0.5}Cl₆ was used as the material represented by the composition formula (1) in producing a positive electrode material. Li_{2.5}Y_{0.5}Zr_{0.5}Cl₆ was produced by the following method. First, in an argon glove box with a dew point of -60°C or lower, LiCI, YCl₃, and ZrCl₄ were weighed as raw material powders at a molar ratio of LiCI: YCl₃: ZrCl₄ = 2.5: 0.5: 0.5. Next, the mixture of these raw material powders was subjected to a milling process at a rotation speed of 600 rpm for 25 hours using a planetary ball mill (Type P-7 manufactured by Fritsch GmbH). Thus, a powder of Li_{2.5}Y_{0.5}Zr_{0.5}Cl₆ was obtained. In the present description, Li_{2.5}Y_{0.5}Zr_{0.5}Cl₆ is referred to also as LYZC. Furthermore, the battery of Example 10 was subjected to a charge and discharge test by the same method as that of Example 1.

### <<Reference Example 1>>

### [Production of Positive Electrode Material]

In an argon glove box with a dew point of -60°C or lower, LiBr, LiCI, and a carbon material were weighed as raw material powders at a molar ratio of LiBr: LiCI: carbon material = 29: 29: 42. The carbon material used was graphite having a median diameter of 8 µm. Next, these raw material powders were mixed together using a planetary ball mill (Type P-7 manufactured by Fritsch GmbH). The mixing by the planetary ball mill was performed at a rotation speed of 200 rpm for 10 minutes, at a rotation speed of 400 rpm for 30 minutes, and at a rotation speed of 500 rpm for 30 minutes.

Next, in an argon atmosphere with a dew point of -60°C or lower, the resulting mixture and Li₆PS₅Cl, which is a sulfide solid electrolyte, were weighed at a mass ratio of 74.8: 25.2. These materials were then mixed in an agate mortar to produce a positive electrode material.

### [Production of Battery]

A battery of Reference Example 1 was produced by the same method as that of Example 1, except that the above positive electrode material was used.

### [Charge and Discharge Test]

The battery of Reference Example 1 was subjected to a charge and discharge test by the same method as that of Example 1, except that the cut-off voltage was set to 3.6 V.

### «Reference Example 2»

A battery of Reference Example 2 was produced by the same method as that of Example 1, except that, in producing a positive electrode material, a powder of metal Al was used instead of the carbon material and the powder of the material represented by the composition formula (1) and the powder of metal Al were used at a mass ratio of 90: 10. Furthermore, the battery of Reference Example 2 was subjected to a charge and discharge test by the same method as that of Example 1.

Table 1 shows the results of the charge and discharge tests of the batteries of the examples and the reference examples. Table 1 also shows the type of carbon material included in the positive electrode, the content of the carbon material in the positive electrode, the ratio I_{D}/I_{G} in the carbon material, the median diameter of the carbon material, the BET specific surface area of the carbon material, the type of material represented by the composition formula (1), etc. The ratio I_{D}/I_{G} in the carbon material means the ratio of the intensity I_{D} of the peak appearing in the range of 1300 cm⁻¹ to 1400 cm⁻¹ to the intensity I_{G} of the peak appearing in the range of 1500 cm⁻¹ to 1700 cm⁻¹ in the Raman spectrum of the carbon material, as described above. The ratio I_{D}/I_{G}, the median diameter, and the BET specific surface area are values measured for the carbon material before production of the positive electrode material. In the charge and discharge test, it was evaluated that charge and discharge could not be performed with respect to the batteries in which the voltage had reached the cut-off voltage quickly after the start of the charge and the batteries in which the current flowing had succeeded during the charge but the voltage had reached the cut-off voltage quickly after the start of the discharge.

**[Table 1]**

| | Positive electrode | | | | | | | Battery | |
|---|---|---|---|---|---|---|---|---|---|
| | Carbon material | | | | | Material of composition formula (1) | Solid electrolyte | Charge and discharge | Discharge capacity (arb.units) |
| | Type | Content (wt%) | Ratio I_{D}/I_{G} | Median diameter (µm) | BET specific surface area (m²g⁻¹) | Type | Type | | |
| Example 1 | Graphite A | 7.4 | 0.23 | 3.00 | 27 | LYBC | - | Possible | 0.010 |
| Example 2 | Graphite A | 17.0 | 0.23 | 3.00 | 27 | LYBC | - | Possible | 0.034 |
| Example 3 | Graphite A | 23.5 | 0.23 | 3.00 | 27 | LYBC | - | Possible | 0.038 |
| Example 4 | Acetylene black | 7.4 | 1.35 | 0.03 | 68 | LYBC | - | Possible | 0.068 |
| Example 5 | Carbon black | 7.4 | 1.03 | 0.04 | 50 | LYBC | - | Possible | 0.080 |
| Example 6 | VGCF | 7.4 | 0.10 | 0.15 | 14 | LYBC | - | Possible | 0.077 |
| Example 7 | Graphene | 7.4 | 0.06 | 2.00 | 500 | LYBC | - | Possible | 0.159 |
| Example 8 | Acetylene black | 7.4 | 1.35 | 0.03 | 68 | LYB | - | Possible | 0.048 |
| Example 9 | Acetylene black | 7.4 | 1.35 | 0.03 | 68 | LYC | - | Possible | 0.023 |
| Example 10 | Acetylene black | 7.4 | 1.35 | 0.03 | 68 | LYZC | - | Possible | - |
| Reference Example 1 | Graphite B | 31.4 | 0.28 | 8.00 | 11 | ^{*}1 | Li₆PS₅Cl | Impossible | 0 |
| Reference Example 2 | *2 | - | - | - | - | LYBC | - | Impossible | 0 |

| | | | | | | | | | |
|---|---|---|---|---|---|---|---|---|---|
| (*1) Positive electrode includes LiBr + LiCI (weight ratio of 1:1) instead of material represented by composition formula (1). (*2) Positive electrode includes 10wt% of metal Al instead of carbon material. | | | | | | | | | |

### <Discussion>

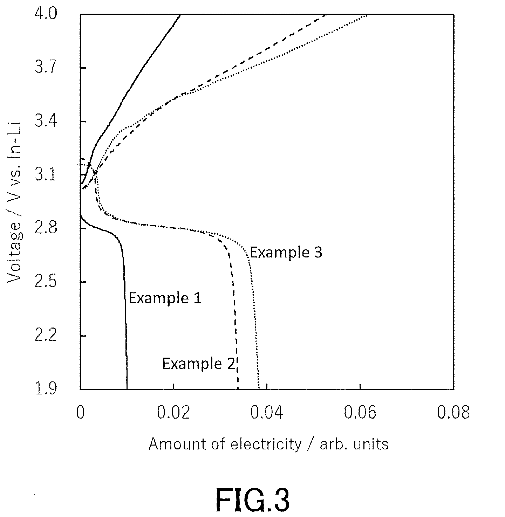

FIG. 3 is a graph showing the initial charge and discharge curves of the batteries of Examples 1, 2, and 3. FIG. 3 shows the discharge characteristics of the batteries.

In the charge and discharge test of Example 1, first, a constant current was applied in the forward direction from the negative electrode toward the positive electrode until the voltage of the battery reached a cut-off voltage of 4.0 V vs. In-Li from the open-circuit voltage. Next, a constant current was applied in a reverse direction to the direction of the charge until the voltage of the battery reached a cut-off voltage of 1.9 V vs. In-Li. As shown in FIG. 3, in the charge and discharge test of Example 1, a plateau region accompanying the charge and discharge of the battery was observed. Furthermore, as can be seen from the comparison among Examples 1 to 3, the higher the content of the carbon material in the positive electrode was, the more the amount of electricity resulting from the charge and discharge increased.

From the observation of the plateau region by the charge and discharge test, it can be seen that the battery of Example 1 exhibits a different behavior from that of the capacitor. In the capacitor, the voltage tends to increase linearly with respect to the current. From the observation of the plateau region, it is inferred that an electrochemical oxidation-reduction reaction occurs in the battery of Example 1 during the charge and discharge test. In other words, it can be seen that the charge reaction proceeded by current application in the forward direction and the discharge reaction proceeded by current application in the reverse direction. Furthermore, from the fact that the higher the content of the carbon material in the positive electrode was, the more the amount of electricity resulting from the charge and discharge increased, it is inferred that the carbon material and the material represented by the composition formula (1) have electrochemically reacted each other. In Example 1, the reversible charge and discharge reaction proceeded using an In-Li alloy as the negative electrode. Accordingly, it can be seen that the charge carrier is Li ions. In other words, in the battery of Example 1, during the charge, Li ions serving as the charge carrier moved from the positive electrode to the negative electrode through the solid electrolyte layer.

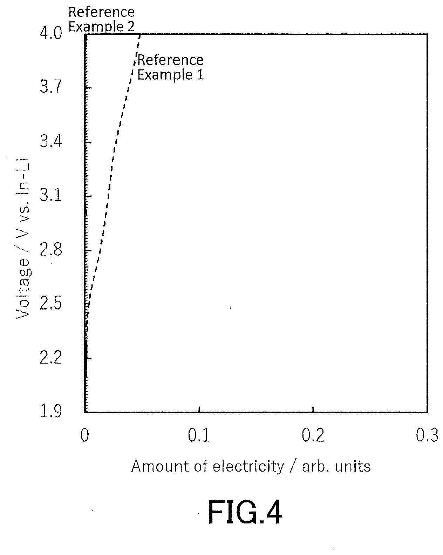

FIG. 4 is a graph showing the initial charge and discharge curves of the batteries of Reference Examples 1 and 2.

In Reference Example 1, the mixture of LiBr and LiCI was used instead of the material represented by the composition formula (1). The molar ratio of Br to Cl in the mixture was 1: 2. This mixture and the carbon material were mixed well using a ball mill. The mixture thus obtained was further mixed with the sulfide solid electrolyte having Li-ion conductivity to produce the positive electrode material. In the charge and discharge test of the battery of Reference Example 1, a charge curve indicating that the charge of the battery had proceed was observed. However, the battery of Reference Example 1 could not be discharged.

In Reference Example 2, the positive electrode material was produced by mixing the material represented by the composition formula (1) used in Example 1 with the powder of metal Al. In the charge and discharge test of the battery of Reference Example 2, both during charge and discharge, the voltage of the battery reached the cut-off voltage with no current flowing through the battery.

The above results indicate that, to proceed the charge reaction of the battery, the material represented by the composition formula (1) and the carbon material need to be combined with each other. Furthermore, it is indicated that, to proceed the discharge reaction, the material represented by the composition formula (1) needs to include at least one selected from the group consisting of metal elements other than Li and metalloid elements.

Although the detailed mechanism is currently under consideration, it is inferred that the contact between the carbon material and the material represented by the composition formula (1) promotes an oxidation-reduction reaction of the material represented by the composition formula (1). Furthermore, it is known that carbon materials having a layer structure, such as graphite, can adsorb various elements into the layer structure. Based on this, it is inferred that, in a positive electrode including the carbon material and the material represented by the composition formula (1), the carbon material occludes a simple substance of halogen or a halide generated by the oxidation-reduction reaction of the material represented by the composition formula (1). This function of the carbon material is inferred to proceed with a reversible charge and discharge reaction of the battery.

Owing to the material represented by the composition formula (1) including a metal element other than Li or a metalloid element, oxidation of a halogen element included in this material makes it difficult to generate a halogen gas during charge of the battery. Thus, a void is less likely to be generated inside the positive electrode during charge of the battery. In other words, the internal structure of the positive electrode is less likely to change. This is inferred to make it difficult to inhibit conduction of electrons and lithium ions during charge and discharge of the battery, thereby proceeding with a reversible charge and discharge reaction. It is inferred that, in Reference Example 1, during the charge of the battery, the internal structure of the positive electrode changed and thus conduction of electrons and lithium ions was inhibited, so that a discharge reaction did not proceed.

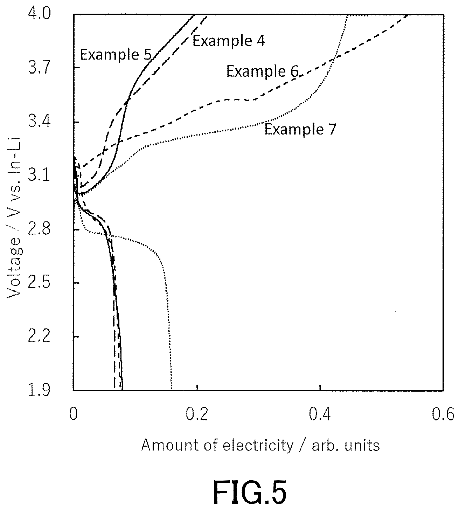

FIG. 5 is a graph showing the initial charge and discharge curves of the batteries of Examples 4 to 7.

As can be seen from FIG. 5, even in the cases where carbon materials other than graphite were used, a reversible charge and discharge reaction proceeded in the battery. The carbon materials used in Examples 4 to 7 include a graphitic structure, a diamondlike structure, etc. It is inferred that, in the batteries of Examples 4 to 7, the charge and discharge reaction proceeded due to the graphitic structure included in the carbon materials. In other words, it is inferred that, in the batteries of Examples 4 to 7, the charge and discharge reaction proceeded due to the layer structure included in the carbon materials. As can be seen from the comparison between Example 1 and Examples 4 to 7, carbon black such as acetylene black, a vapor-grown carbon fiber, and graphene are suitable for improving the discharge capacity of the battery as compared with graphite.

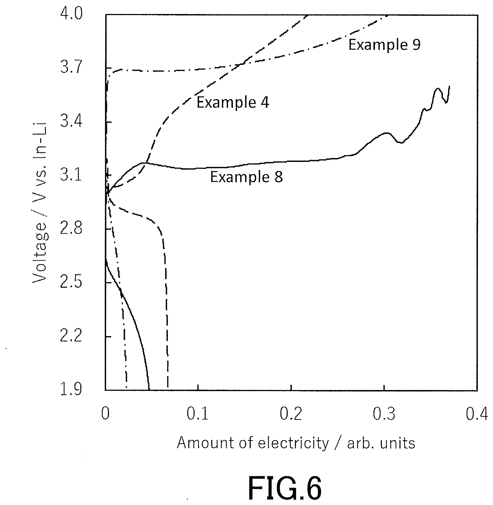

FIG. 6 is a graph showing the initial charge and discharge curves of the batteries of Examples 4, 8, and 9.

Even in the case where LYB or LYC was used as the material represented by the composition formula (1), a reversible charge and discharge reaction proceeded in the battery as in the case where LYBC was used. The results indicate that the material represented by the composition formula (1) does not need to include both Br and CI, and only needs to include one halogen element. In particular, it is inferred that the type of halogen element included in the material represented by the composition formula (1) is not limited to Br or Cl as long as the voltage of the battery can be swept to a voltage at which oxidation-reduction of the halogen element occurs.

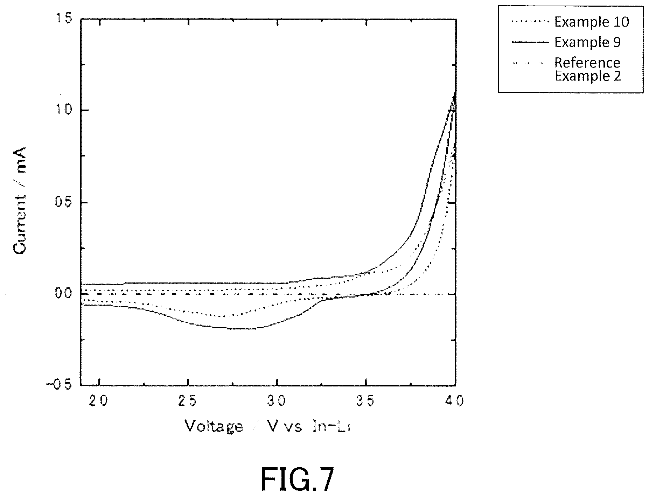

FIG. 7 is a graph showing cyclic voltammograms of the batteries of Examples 9 and 10 and Reference Example 2.

As can be seen from FIG. 7, in the battery of Reference Example 2, no peak due to oxidation-reduction of the material represented by the composition formula (1) was observed. This indicates that an oxidation-reduction reaction of the material represented by the composition formula (1) hardly proceeds in the case where metal Al and the material represented by the composition formula (1) are combined.

On the other hand, as can be seen from FIG. 7, in the batteries of Examples 9 and 10, peaks due to oxidation-reduction of the material represented by the composition formula (1) could be distinctly observed. This indicates that an oxidation-reduction reaction of the material proceeds even in the case where LYC or LYZC is used as the material represented by the composition formula (1). In other words, it is indicated that the oxidation-reduction reaction of the material proceeds regardless of the type of metal element other than Li or metalloid element included in the material represented by the composition formula (1). It is indicated that, regardless of the type of metal element other than Li or metalloid element included in the material represented by the composition formula (1), a simple substance of halogen or a halide generated from this material is occluded by the carbon material.

### <<Example 11>>

### [Production of Material Represented by Composition Formula (1)]

A powder of LYBC, which is the material represented by the composition formula (1), was obtained by the same method as that of Example 1.

### [Production of Positive Electrode Material]

In an argon atmosphere with a dew point of -60°C or lower, the powder of LYBC and a powder of graphene, which is a carbon material, were weighed at a mass ratio of 92.6: 7.4. These materials were then mixed in an agate mortar to produce a positive electrode material.

### [Production of Battery]

In an insulating outer cylinder, Li₆PS₅Cl, which is a sulfide solid electrolyte, the powder of LYBC, and the positive electrode material were stacked in this order. The weight of Li₆PS₅Cl was 60 mg. The weight of LYBC was 20 mg. The weight of the positive electrode material was 5 mg. Next, a pressure of 720 MPa was applied to these materials to obtain a solid electrolyte layer and a first electrode serving as a positive electrode.

Next, a metal Li foil was stacked on one surface of the solid electrolyte layer opposite to the other surface in contact with the first electrode. A pressure of 80 MPa was applied to this metal foil to produce a stack including the first electrode, the solid electrolyte layer, and the second electrode serving as a negative electrode.

Next, respective current collectors made of stainless steel were placed on the positive electrode and the negative electrode, and current collector leads were attached to these current collectors. Next, an insulating ferrule was used to block the inside of the insulating outer cylinder from the outside air atmosphere and seal the insulating outer cylinder. Thus, a battery of Example 11 was produced.

### [Charge Test]

The battery of Example 11 was subjected to a charge test by the following method. First, the battery was placed in a thermostatic chamber set to 25°C. The battery was charged with a constant current at a current value of 0.1 mA. The constant-current charge was performed until the voltage of the battery reached 4.4 V. Next, the battery was charged with a constant voltage until the current value lowered to 0.01 mA.

### [Discharge Test]

The battery, which had been subjected to the constant current-constant voltage charge, was discharged with a constant current at a current value of 0.01 mA. The constant-current discharge was performed until the voltage of the battery reached 2.5 V. Next, the battery was discharged with a constant voltage until the current value lowered to 0.002 mA.

### [Raman Spectroscopy Measurement]

Raman spectroscopy measurement was performed on the positive electrode material of the battery of Example 11 before the charge test, after the charge test, and after the discharge test. The Raman spectroscopy measurement was performed by the following method. First, the above stack was taken out from the battery. Next, the stack was sealed in an airtight cell to perform the Raman spectroscopy measurement on the stack. The Raman spectroscopy measurement was performed using NRS-5500 manufactured by JASCO Corporation by an Ar ion laser emitting light having a wavelength of 457 nm. In detail, the surface of the positive electrode side of the stack was mapped and measured. Multivariate curve resolution (MCR) was performed on the obtained data to separate carbon-derived peaks. Thus, the Raman spectrum of the carbon material in the positive electrode material was obtained.

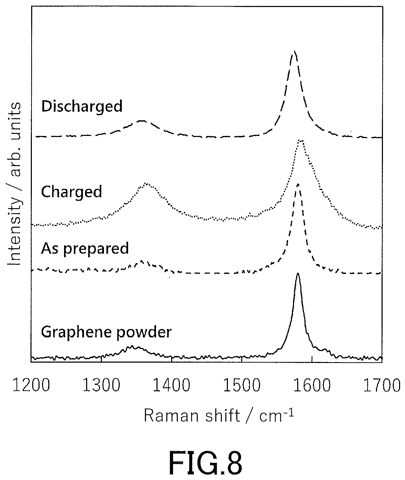

FIG. 8 is a graph showing the results of the Raman spectroscopy measurement performed on the positive electrode material of the battery of Example 11 before the charge test, after the charge test, and after the discharge test. The graph in FIG. 8 also shows the results of the Raman spectroscopy measurement performed on the powder of graphene. As can be seen from FIG. 8, in the Raman spectrum of the carbon material in the positive electrode material after the charge test, the peak of the G band appearing around 1580 cm⁻¹ became broad and shifted to higher frequencies, compared with the Raman spectrum of the carbon material in the positive electrode material before the charge test. It is inferred from this that, through the charge test, the carbon material adsorbed a simple substance of halogen or a halide derived from the material represented by the composition formula (1).

Furthermore, as can be seen from FIG. 8, in the Raman spectrum of the carbon material in the positive electrode material after the discharge test, the peak of the G band shifted to lower frequencies, compared with the Raman spectrum of the carbon material in the positive electrode material after the charge test. From this, it is inferred that, through the discharge test, the simple substance of halogen or the halide, which had been adsorbed on the carbon material, was desorbed from the carbon material.

### INDUSTRIAL APPLICABILITY

The positive electrode material of the present disclosure can be utilized, for example, in all-solid-state secondary batteries.

## Claims

1. A positive electrode material comprising:
a material represented by the following composition formula (1); and
a carbon material capable of occluding at least one selected from the group consisting of a simple substance of halogen and a halide,
LiₐM_{b}X_{c} ... Formula (1)
where a, b, and c are each a value greater than 0, M includes at least one selected from the group consisting of metal elements other than Li and metalloid elements, and X includes a halogen element.

2. The positive electrode material according to claim 1, wherein
in a Raman spectrum of the carbon material, a ratio I_{D}/I_{G} of an intensity I_{D} of a peak appearing in a range of 1300 cm⁻¹ to 1400 cm⁻¹ to an intensity I_{G} of a peak appearing in a range of 1500 cm⁻¹ to 1700 cm⁻¹ is 0 or more and 2 or less.

3. The positive electrode material according to claim 1 or 2, wherein
the carbon material has a BET specific surface area of more than 5 m²g⁻¹.

4. The positive electrode material according to any one of claims 1 to 3, wherein
the carbon material includes at least one selected from the group consisting of graphite, graphene, graphene oxide, reduced graphene oxide, a carbon nanotube, fullerene, a carbon fiber, carbon black, soft carbon, hard carbon, mesoporous carbon, and activated carbon.

5. The positive electrode material according to any one of claims 1 to 3, wherein
the carbon material includes at least one selected from the group consisting of carbon black, a vapor-grown carbon fiber, and graphene.

6. The positive electrode material according to any one of claims 1 to 5, wherein the M includes Y

7. The positive electrode material according to any one of claims 1 to 5, wherein the M includes Y and Zr.

8. The positive electrode material according to any one of claims 1 to 7, wherein the X includes at least one selected from the group consisting of Cl and Br.

9. A battery comprising:
a positive electrode including the positive electrode material according to any one of claims 1 to 8;
a negative electrode; and
an electrolyte layer disposed between the positive electrode and the negative electrode.

10. The battery according to claim 9, wherein
the negative electrode includes a negative electrode active material capable of occluding lithium.

11. The battery according to claim 9 or 10, wherein
the negative electrode includes at least one selected from the group consisting of metal lithium, a lithium alloy, metal indium, an indium alloy, a carbon material, silicon, a silicon alloy, silicon oxide, and lithium titanate.

12. The battery according to any one of claims 9 to 11, wherein
the electrolyte layer includes a solid electrolyte material, and
a composition of the solid electrolyte material is different from a composition of the material represented by the composition formula (1).

13. The battery according to any one of claims 9 to 12, wherein
the electrolyte layer includes a sulfide solid electrolyte.

14. The battery according to any one of claims 9 to 13, wherein
during charge, a halogen element included in the material represented by the composition formula (1) is oxidized to generate at least one selected from the group consisting of a simple substance of halogen and a halide, and
during discharge, a halogen element included in at least one selected from the group consisting of the simple substance of halogen and the halide is reduced.
